# EUROPÄISCHE PATENTSCHRIFT

(11) **EP 1 405 041 B1**
(45) Veröffentlichungstag und Bekanntmachung des Hinweises auf die Patenterteilung: **08.01.2014**
(21) Anmeldenummer: 02764660.3
(22) Anmeldetag: 09.07.2002
(51) Int. Cl.: G01D 4/00

(54) **VERFAHREN ZUR ERFASSUNG VON ZÄHLERSTANDSDATEN UND VERBRAUCHSDATEN-ERFASSUNGSSYSTEM**
METHOD FOR COLLECTING METER READING INFORMATION AND A COLLECTION SYSTEM FOR CONSUMER DATA
PROCEDE DE COLLECTE DES DONNEES VALEURS AFFICHEES AUX COMPTEURS ET SYSTEME DE COLLECTE DE CES DONNEES

(30) Priorität: 10.07.2001 DE 10133366
(43) Veröffentlichungstag der Anmeldung: 07.04.2004
(73) Patentinhaber: Prof. Dr. Horst Ziegler und Partner GbR, 70499 Stuttgart (DE)
(72) Erfinder: Ziegler, Horst Prof. Dr., 33100 Paderborn (DE)
(74) Vertreter: Tiesmeyer, Johannes
(86) Internationale Anmeldenummer: PCT/EP2002/007646
(87) Internationale Veröffentlichungsnummer: WO 2003/006924

(56) Entgegenhaltungen:
- WO-A-93/04451
- WO-A-99/67904
- US-A- 5 278 551
- US-A- 5 495 239

## Beschreibung

Die Erfindung betrifft ein Verfahren zur Erfassung von Zählerstandsdaten von mehreren, an verschiedenen Orten vorgesehenen Verbrauchszählern, wie z.B. Heizkostenverteiler, Gaszähler, Wasserzähler, Stromzähler, Wärmezähler etc. nach dem Oberbegriff des Anspruchs 1.

Versorgungsunternehmen, etwa Energieversorgungsunternehmen oder Wasserversorgungsunternehmen, erstellen üblicherweise die Verbrauchsabrechnungen für ihre Kunden auf der Basis von Zählerstandsdaten von Verbrauchszählern, welche jeweiligen Medienverbrauchsstellen der Kunden zugeordnet und üblicherweise in der Nähe der Verbrauchsstellen installiert sind. Die Zählerstandsdaten geben jeweils für zurückliegende Verbrauchsperioden ein Maß für die verbrauchte Menge des betreffenden Mediums an der Verbrauchsstelle an.

Üblicherweise erfolgt die Erfassung der Zählerstandsdaten bzw. die Zählerablesung für ein Haus, eine Wohnung oder ggf. eine einzelne Verbrauchsstelle mindestens einmal jährlich. Für die Zählerstandsdaten-Erfassung sind derzeit verschiedene Verfahren im Einsatz. Bei herkömmlichen mechanischen Verbrauchszählern oder etwa Verdunstern für die Heizkostenerfassung wird der Zählerstand bzw. Verbrauchsmesswert von einer jeweiligen Person abgelesen und auf einem Protokollbogen notiert oder ggf. mit Hilfe eines üblicherweise mit einer Eingabetastatur ausgestatteten Datenerfassungsgerätes manuell erfasst. Bei so genannten elektronischen Verbrauchszählern erfolgt die Verbrauchsdaten-Erfassung gelegentlich auch automatisch durch optische Datenübertragung, wobei der Verbrauchszähler und ein an den Verbrauchszähler heranzuführendes Datenerfassungsgerät eine optische Datenschnittstelle aufweisen.

Diese konventionellen Verfahren zur Zählerstandsdaten-Erfassung erfordern einen Zugang der Ableseperson zu dem jeweiligen Verbrauchszähler und damit einen normalerweise mindestens jährlichen Zugang zu betreffenden Räumen eines Hauses bzw. einer Wohnung. Viele Bewohner empfinden eine solche manuelle Verbrauchszählerablesung in den Wohnungsräumen als störend. Ein Nachteil dieser konventionellen Verfahren besteht auch darin, dass häufige Abwesenheit der Bewohner von ihren Wohnungen zu Problemen bei der Terminvereinbarung führt und damit einhergehend Mehrfachanfahrten des Ablesepersonals erforderlich macht. Schließlich erfordert auch das Management bzw. die Verwaltung eines solchen Systems erheblichen organisatorischen Aufwand.

Zur Vermeidung dieser Nachteile werden verschiedene Systeme zur Funkauslesung von Zählerstandsdaten eingesetzt, etwa solche Systeme, bei denen der Zählerstand vom Verbrauchszähler unidirektionell in quasi zufälligen Zeitabständen (zur Vermeidung von Dauerkollisionen) zu einer Empfangsstation per Funk übertragen wird. Diese Verbrauchszähler weisen jeweils eine Funksendeeinrichtung auf, welche Zählerstandsdaten in Zuordnung zu Zähleridentifikationsdaten in einem jeweiligen Funktelegramm aussenden kann. Als Empfänger für diese Funktelegramme werden üblicherweise stationäre Empfangsgeräte eingesetzt. Solch ein stationäres Empfangsgerät kann beispielsweise im Treppenhaus eines Wohnhauses installiert sein, um die Funktelegramme von Verbrauchszählern zu empfangen, welche beispielsweise in verschiedenen Wohnungen des Hauses installiert sind. Zur Verbrauchsdaten-Erfassung ist es in einem solchen Fall nicht mehr erforderlich, dass das Ablesepersonal die Wohnungen betritt. Es reicht aus, wenn die Ableseperson Zutritt zu dem Empfangsgerät im Treppenhaus des Hauses hat.

In einer alternativen Variante des vorstehend angesprochenen Systems können die Funkempfangsgeräte untereinander drahtgebunden oder über ein weiteres Funk-Kommunikations-System vernetzt sein, und in einer weiteren Stufe können die Zählerstandsdaten auch über stationäre, leitungsgebundene Standard-Modems oder über stationäre Funk-Modems (im Folgenden WAN-Funk genannt) an eine zentrale Datenerfassungsstelle übertragen werden, die die Zählerstände speichert und auswertet. Zum Stand der Technik wird diesbezüglich auf die EP 0 596 913 B1 verwiesen.

Wegen der allfälligen Interferenzfunklöcher durch die Mehrweg-Funkausbreitung der von den Verbrauchszählern gesendeten Funktelegramme in Gebäuden muss darauf geachtet werden, dass die Funksendeeinrichtung eines betreffenden Verbrauchszählers im potenziellen Empfangsbereich mindestens zweier solcher stationärer Empfänger liegt, wie dies auch im Stand der Technik gefordert ist. Die Komponenten für den Funkempfang und für die Funkweiterleitung sind jedoch in Beschaffung, Montage, Inbetriebnahme und Betrieb relativ teuer, so dass sich vor allem bei einer meist nur jährlichen Verbrauchsabrechnung ihr Betrieb nicht aus den eingesparten Kosten für das Ablesepersonal finanzieren lässt. Ein Vorteil dieser "funkenden" Systeme ist aber, dass die Verbrauchszählerinformationen vollautomatisch und ohne Bedienungs- und Eingabefehler in einer Abrechnungszentrale zusammenlaufen. Vorteilhaft ist außerdem, dass eine geringe Sendehäufigkeit der Funksendeeinrichtungen der Verbrauchszähler ausreicht, um das System zuverlässig zu betreiben. Die Sendehäufigkeit kann beispielsweise bei einem Verbrauchszähler bei einem Funksendetelegramm pro Stunde liegen. Eine geringe Funksendehäufigkeit wird angestrebt, damit die Verbrauchszähler und deren Funksendeeinrichtungen mittels Batterie betrieben werden können, wobei eine Batterielebensdauer von etwa 10 Jahren gewünscht ist.

Eine alternative Methode im Rahmen der vorliegenden Erfindung besteht nun darin, die Häufigkeit des Sendens der Funktelegramme von den Verbrauchszählern zu steigern, etwa bis in den Bereich einer Häufigkeit pro Zähler von einem Sendetelegramm pro Minute oder gar einem Sendetelegramm pro 10 Sekunden. Wegen der gewünschten langen Batterielebensdauer bei den batteriebetriebenen "funkenden" Verbrauchszählern erfordert die gesteigerte Sendehäufigkeit eine besonders hohe Datenübertragungsrate und damit möglichst kurze Sendetelegramme, etwa im Millisekundenbereich. Bei genügend hoher Sendehäufigkeit der Verbrauchszähler kann es praktikabel sein, die Funkauslesung dieser Verbrauchszähler mittels mobiler Empfänger durchzuführen, wobei eine jeweilige Person mit einer mobilen Funkempfangs-Datenübernahmeinrichtung eine Datenerfassungstour zu absolvieren hat, bei der die Person die Funkempfangs-Datenübernahmeeinrichtung nacheinander in die Bereiche der Sendereichweiten der per Funk auszulesenden Verbrauchszähler bringt. Dies kann z.B. dadurch geschehen, dass die mobile Funkempfangs-Datenübernahmeeinrichtung mit einem Fahrzeug langsam eine Straße entlangbewegt wird (drive-by), an der Häuser mit zur Verbrauchsdaten-Erfassung anstehenden "funkenden" Verbrauchszählern stehen. Andernfalls kann es auch zweckmäßig sein, dass die die Funkempfangs-Datenübernahmeeinrichtung mitführende Person das betreffende Gebiet zu Fuß abgeht (walk-by). Im Mehrgeschoß-Wohnungsbau wird es in der Regel erforderlich sein, dass die die mobile Funkempfangs-Datenübernahmeeinrichtung mitführende Person über das Treppenhaus alle Stockwerte des Hauses begeht (walk-in), um von sämtlichen zur Funkauslesung anstehenden Verbrauchszählern die unidirektional von den Sendeeinrichtungen der Verbrauchszähler gesandten Sendetelegramme nacheinander zu empfangen. Durch die Bewegung der mobilen Funkempfangs-Datenübernahmeeinrichtungen werden stark lokalisierte Interferenzfunklöcher des Verbrauchszählerfunks schnell durchmessen, so dass die bei den stationären Funkempfangssystemen gegebene Notwendigkeit von Mehrfachempfängern entfällt. Die mobilen Funkempfangs-Datenübernahmeeinrichtungen umfassen Datenspeicher für die in den empfangenen Funktelegrammen enthaltenen Daten.

Um bei Wechsel des Nutzers einer Wohnung mit einem betreffenden Verbrauchszähler Zwischenabrechnungen durchführen zu können, sollten bei der Jahresverbrauchsabrechnung die Verbrauchszählerstandswerte zu jedem Monatsende bekannt sein. Bei stationären Empfangssystemen lassen sich solche Zwischenstandswerte problemlos aus den zur zentralen Datenerfassungsstelle übertragenen aktuellen Zählerstandswerte der Verbrauchszähler gewinnen und speichern. Um bei der Zählerstandsdatenerfassung mit einer mobilen Funkempfangs-Datenübernahmeeinrichtung die dazu notwendigen teuren Mehrfachbegehungen zu vermeiden, kann man im Verbrauchszähler mehrere Zwischenzählerstände speichern und in den Funktelegrammen der Verbrauchszähler nicht nur den aktuellen Zählerstandswert sondern auch die Zählerstandswerte zu festen Zeitpunkten (z.B. einem vereinbarten Abrechnungsstichtag) und/oder die Zählerstandswerte oder Zählerstandswertzuwächse zu weiteren vorgegebenen Zeitpunkten (z.B. an jedem Monatsende) zusammen mit einer eventuellen Kennzeichnung des jeweiligen Speicherzeitpunktes speichern und in den Verbrauchszähler-Funktelegrammen mit übertragen, so dass die Funkempfangs-Datenübernahmeeinrichtung nicht nur den momentanen Zählerstandswert empfängt und speichert, sondern auch einen oder mehrere Zählerstandswerte aus der Vergangenheit und ggf. auch Informationen über die zugehörigen Speicherzeitpunkte.

Bei der vorstehend angesprochenen mobilen Funkauslesung von Verbrauchszählern kann es vorkommen, dass von einzelnen Verbrauchszählern keine Funktelegramme empfangen und gespeichert werden können. Gründe hierfür können beispielsweise momentane Funkstörungen durch Fremdnutzer im Funkkanal, zu lange Wartezeiten mit der Funkempfangs-Datenübernahmeeinrichtung in Funklöchern oder zufällige Gleichzeitigkeit von Funktelegrammübertragungen verschiedener Verbrauchszähler sein. Durch den kurzen Sendeabstand zwischen einzelnen Funktelegrammen eines Verbrauchszählers einerseits und die ggf. große Anzahl von Verbrauchszählern in einem Haus, z.B. Mehrfamilienhaus, kann eine solche Kollisionswahrscheinlichkeit durchaus 20 % und mehr betragen. Die hohe Sendehäufigkeit ist dabei erforderlich, damit auch bei den angestrebten kurzen Verweilzeiten der Funkempfangs-Datenübernahmeeinrichtung von weniger als 1 Minute in jedem Stockwerk eines Gebäudes eine genügend hohe Wahrscheinlichkeit besteht, dass in dieser Zeit von den betreffenden Verbrauchszählern jeweils mindestens ein, möglichst jedoch mehrere Funktelegramme empfangen werden.

Ist bei der Datenerfassungstour ein zur Funkauslesung vorgesehener Verbrauchszähler ausgelassen worden, weil die Funkempfangs-Datenübernahmeeinrichtung keine Daten von diesem Verbrauchszähler erhalten hat, und wird dies erst nach Absolvierung der Datenerfassungstour im Übrigen bemerkt, so ist es normalerweise erforderlich, dass die mit der Funkauslesung betraute Person die Funkempfangs-Datenübernahmeeinrichtung erneut in den Bereich der Sendereichweite des ausgelassenen Verbrauchszählers bringt. Um solche Situationen zu vermeiden, können die mobilen Funkempfangs-Datenerfassungsgeräte mit einer eigenen Datenbank ausgestattet sein, die vor Beginn der Datenerfassungstour mit allen Daten der zur Erfassung anstehenden Wohnobjekte und den Identifikationsdaten (z.B. Zählernummern) aller zur Funkauslesung anstehenden Verbrauchszähler geladen wird. Bei Empfang von Verbrauchszähler-Funktelegrammen werden diese dann online entschlüsselt und mit der Datenbank der mobilen Datenerfassungseinrichtung verglichen, so dass der mit der Funkauslesung betrauten Person eine entsprechende Rückmeldung von dem mobilen Datenbanksystem gegeben werden kann.

Ein Nachteil des Einsatzes eines solchen mobilen Datenerfassungssystems mit Datenbank bei der Funkauslesung von Verbrauchszählern sind die hohen datentechnischen Anforderungen an das mobile Datenerfassungssystem. Das Datenerfassungssystem muss nämlich in der Lage sein, Daten hoher Übertragungsrate dauernd zu empfangen, empfangene Daten, die aus Sicherheits- und Datenschutzgründen meist kodiert sind, zu entschlüsseln, schnelle Suchoperationen in den Datenbanken vorzunehmen und Nutzereingaben sowie den Bildschirm zu bedienen. Solche Anforderungen können z. B. von Notebook-Computem erfüllt werden. Für den hier betrachteten Anwendungsfall der mobilen Datenübernahme von Verbrauchszählern sind Notebook-Computer jedoch vergleichsweise unhandlich, schwer und teuer. Hinzu kommt, dass Notebook-Computer großen elektrischen Energiebedarf haben, so dass Ersatzbatterien bzw. Akkumulatoren mitgeführt werden müssen. Ein weiterer Nachteil des Einsatzes solcher Datenerfassungssysteme liegt darin, dass die Bedienung eine umfassende Ausbildung der jeweiligen Bedienungsperson erfordert. Hinzu kommt, dass die Pflege der Software in vielen solchen dezentralen Systemen weitere logistische Aufwendungen erfordert.

Aus US 5 495 239 A ist ein Verfahren zur Erfassung von Zählerstandsdaten von mehreren, an verschiedenen Orten vorgesehenen Verbrauchszählern nach dem Oberbegriff des Anspruchs 1 bekannt. Zum Stand der Technik sei ferner auf US 5 278 551 A, WO 99/67904 und WO 93/04451 verwiesen.

Der Erfindung liegt die Aufgabe zugrunde, ein Verfahren der eingangs genannten Art zur Erfassung von Zählerstandsdaten anzugeben, welches mit einem hohen Grad an Zuverlässigkeit hinsichtlich der Vollständigkeit der bei einer Datenerfassungstour zu erfassenden Zählerstandsdaten zeitoptimiert und/oder wegeoptimiert für das mobile Datenerfassungspersonal durchführbar ist und insbesondere keine umfassenden Spezialkenntnisse des mobilen Datenerfassungspersonals erfordert.

Zur Lösung dieser Aufgabe wird ein Verfahren zur Erfassung von Zählerstandsdaten von mehreren, an verschiedenen Orten vorgesehenen Verbrauchszähern nach Anspruch 1 vorgeschlagen.

Identifikationsdaten eines betreffenden Verbrauchszählers werden dabei möglichst unmittelbar nach der Übernahme der Zählerstandsdaten in die Datenübernahmeeinrichtung online zu der zentralen Datenerfassungsstelle übertragen. Der Eingang der Identifikationsdaten bei der Datenerfassungsstelle wird als Beleg dafür gewertet, dass der Verbrauchszähler, dem die Identifikationsdaten zugeordnet sind, bei der Datenerfassungstour aktuell berücksichtigt worden ist und die Zählerstandsdaten dieses Zählers erfasst wurden.

Das Mobilfunksystem, über das die Datenübertragung von der Datenübernahmeeinrichtung zu der Datenerfassungsstelle abgewickelt wird, ist vorteilhafterweise ein für die Nutzung durch die Öffentlichkeit installiertes WAN-Funkübertragungssystem, mit einem vorzugsweise flächendeckenden Funknetz mit betreffenden Basisstationen. Als Endgeräte mit Sendefunktion und Empfangsfunktion innerhalb des Mobilfunksystems werden im Rahmen der Erfindung vorzugsweise Funktelefone und/oder Funkmodems benutzt, die auf der Basis eines oder mehrerer der folgenden Mobilfunkstandards funktionieren: GSM, SMS, GPRS, UMTS, TETRA etc. Auch satellitenbasierte WAN-Funkübertragungssysteme kommen als Mobilfunksystem für die Datenübertragung von der jeweiligen Datenübernahmeeinrichtung zu der zentralen Datenerfassungsstelle in Frage. Die Nutzung eines solchen öffentlichen Funktelefonsystems im Rahmen des erfindungsgemäßen Verfahrens bietet erhebliche Kostenvorteile.

In einer der zentralen Datenerfassungsstelle zugeordneten Auswertungsstelle werden die über das Mobilfunksystem übertragenen Verbrauchszähler-Identifikationsdaten mit zentral gespeicherten Verbrauchszähler-Identifikationsdaten verglichen, um festzustellen, ob bei der aktuellen Datenerfassungstour Verbrauchszähler unbeabsichtigt ausgelassen worden sind. Bei Feststellung eines bei der Datenerfassungstour ausgelassenen Verbrauchszählers kann die Auswertungsstelle dann eine Funkmeldung über das Mobilfunksystem zu einem mit der Datenübernahmeeinrichtung bei der Datenerfassungstour mitzuführenden Mobilfunkempfänger gesendet werden, um die mit der Datenfassung betraute Person auf den ausgelassenen Verbrauchszähler hinzuweisen.

Da eine solche Rückmeldung von der Datenerfassungsstelle bzw. von der Auswertungsstelle zu der die Datenerfassungstour durchführenden Person möglichst aktuell zu einem Zeitpunkt erfolgen sollte, zu dem sie sich noch in der Nähe des betreffenden Verbrauchszählers befindet, der von der Auswertungsstelle als bei der Datenerfassungstour nicht berücksichtigt identifiziert wurde, ist es im Rahmen der vorliegenen Erfindung wichtig, dass die Identifikationsdaten eines jeweiligen Zählers, dessen Zählerstandsdaten erfasst wurden, möglichst bald nach Übernahme dieser Zählerstandsdaten in die Datenübernahmeeinrichtung über das Mobilfunksystem zur Datenerfassungsstelle gesendet werden, wobei eine Dauer von 15 Minuten zwischen Übernahme der Zählerstandsdaten und Absendung der Identifikationsdaten in Bezug auf einen jeweiligen Zähler nicht überschritten werden sollte. In besonders bevorzugter Weise sollte der Abstand zwischen der Datenübernahme vom jeweiligen Verbrauchszähler und die Weitersendeung der Identifikationsdaten zur Datenerfassungsstelle möglichst klein sein und vorzugsweise weniger als 2 Minuten und insbesondere weniger als 1 Minute betragen. Durch den sofortigen Vergleich der über das Mobilfunksystem empfangenen Zähleridentifikationsdaten mit den in einer Datenbank zentral gespeicherten Zähleridentifikationsdaten kann ein bei der Datenerfassungstour nicht berücksichtigter Verbrauchszähler rasch identifiziert werden, etwa wenn bereits Identifikationdsaten eines Verbrauchszählers empfangen wurden, obwohl Identifikationsdaten eines bei der Datenerfassungstour unmittelbar vorher zu berücksichtigenden Verbrauchszählers nicht von der Datenerfassungsstelle empfangen wurden. Die Rückmeldung mit Hinweis auf das Auslassen eines betreffenden Verbrauchszählers kann dann so rasch erfolgen, dass die Datenerfassungsperson sich noch in der Nähe des ausgelassenen Verbrauchszählers aufhält und diesen ohne nennenswerte Umwege erreichen kann, um die Datenerfassung rasch nachzuholen. Da in der zentralen Datenbank der Auswertungsstelle in Zuordnung zu den Zähleridentifikationsdaten auch der Ort der Verbrauchszähler gespeichert ist, kann in der Rückmeldung an die Datenerfassungsperson auch ein Hinweis auf den Ort des jeweils bei der Datenerfassungstour unbeabsichtigt ausgelassenen Verbrauchszählers enthalten sein. Die Rückmeldung kann über eine grafische oder alphanumerische Anzeige erfolgen, die dem bei der Datenerfassungstour mitgeführten Mobilfunkempfänger nachgeschaltet ist. Die Datenerfassungsperson kann dann über das Anzeigesystem an den Ort des ausgelassenen Verbrauchszählers geführt werden. Denkbar ist auch, dass die Rückmeldung vermittels Tonsignalen oder synthetischer Sprache über eine akustische Einrichtung des Mobilfunkempfängers oder z. B. via SMS-Nachricht beispielsweise an ein Handy erfolgen kann.

Der Arbeitsablauf kann für das Personal auf der Datenerfassungstour noch weiter optimiert werden, wenn zusätzlich zu den Identifikationsdaten eines jeweiligen Verbrauchszählers auch Daten über die jeweilige geografische Position der mobilen Datenübernahmeeinrichtung über das Mobilfunksystem an die zentrale Datenerfassungsstelle gesendet werden. Auf der Basis der Informationen über die momentane geografische Position der mobilen Datenübernahemeinrichtung und der in der Datenerfassungsstelle zentral gespeicherten Informationen über die geografischen Positionen der Verbrauchszähler können nun über das Mobilfunksystem Wegeleitinformationen an einen mit der Datenübernahmeeinrichtung mitzuführenden Mobilfunkempfänger des Mobilfunksystems gesendet werden, wobei diese Wegeleitinformationen die Datenerfassungsperson jeweilis darüber in Kenntnis setzen können, wo sie sich hinbegeben soll, um einen nächsten, zur Verbrauchsdatenerfassung anstehenden Verbrauchszähler zu erreichen.

Die jeweilige geografische Position der mobilen Datenübernahmeeinrichtung wird vorzugsweise unter Nutzung eines Funknavigationssystems, beispielsweise des GPS-Systems ermittelt, wobei die dazu nötigen Komponenten des Funknavigationssystems mit der Datenübernahmeeinrichtung mitzuführen sind.

Das erfindungsgemäße Verfahren kann gemäß einer Verfahrensvariante auch so durchgeführt werden, dass die Datenerfassungsperson die Zählerstandsdaten selbst visuell abliest und dann mit der Zählernummer des betreffenden Verbrauchszählers über eine Tastatur in die Datenübernahmeeinrichtung eingibt. Sobald dies geschehen ist, sendet dann ein mit der Datenübernahmeeinrichtung kommunizierendes Mobilfunksende-und-empfangsgerät die Identifikationsdaten des Verbrauchszählers, also beispielsweise die Gerätenummer des Verbrauchszählers, so dass diese Zähleridentifikationsdaten zu der zentralen Datenerfassungsstelle übertragen werden.

So kann in einem einfachen Ausführungsbeispiel die Datenübernahmeeinrichtung ein Handy sein, dessen Tastatur direkt zur Eingabe von Verbrauchszählernummern und Zählerstandsdaten genutzt wird, so dass von dem Handy aus die Zählerstandsdaten in Zuordnung zu den Zähleridentifikationsdaten gesendet werden, um sie über das Mobilfunksystem zur zentralen Datenerfassungsstelle zu übertragen. Apparativ geringfügig aufwendiger ist eine Datenübernahmeeinrichtung, welche eine für die Dateneingabe von Zählerstandsdaten und Zähleridentifikationsdaten bequemer und übersichtlicher zu handhabende Eingabeeinheit mit angeschlossenem bzw. integriertem Mobilfunksende- und -empfangsgerät aufweist.

Die Zähler und die mobile Datenübernahmeeinrichtung können mit einer optischen Datenkommunikationsstelle ausgestattet sein, so dass die Daten zur Verbrauchszähleridentifikation und die Zählerstandsdaten solcher Verbrauchszähler jeweils im Wege der optischen Signalübertragung vom Verbrauchszähler zu der mobilen Datenübernahmeeinrichtung übertragen werden können. Eine manuelle Dateneingabe mittels Tastatur oder dergleichen kann damit entfallen. Als Datenübernahmeeinrichtung kommt beispielsweise ein Handy mit integrierter optischer IRDA-Schnittstelle in Frage, welches entsprechend ausgestattete Verbrauchszähler unmittelbar optisch auslesen kann und ferner die ausgelesenen Daten senden kann, damit sie über das Mobilfunksystem zu der zentralen Datenerfassungsstelle übertragen werden.

Vorteilhafterweise werden in Zuordnung zu den Identifikationsdaten eines betreffenden Verbrauchszählers auch die aktuell von dem Verbrauchszähler übernommenen Zählerstandsdaten über das Mobilfunksystem zu der zentralen Datenerfassungsstelle gesendet. Die Datenübernahmeeinrichtung kann dann ohne aufwendige Massen-Datenspeichereinrichtungen auskommen.

Die Verbrauchszähler sind mit einer jeweiligen Funksendeeinrichtung mit vorzugsweise geringer Sendereichweite ausgestattet, wobei die Funksendeeinrichtung dazu eingerichtet ist, die Identifikationsdaten und die Zählerstandsdaten des zugehörigen Verbrauchszählers zu senden, und wobei die mobile Datenübernahmeeinrichtung eine Funkempfangseinrichtung zum Empfang solcher Daten umfasst, wobei man bei der Datenerfassungstour die mobile Datenübernahmeeinrichtung in den Bereich der Sendereichweite der Funksendeeinrichtung eines jeweiligen Verbrauchszählers bringt, um dessen Identifikationsdaten und Zählerstandsdaten im Wege der Funkübertragung zu übernehmen.

Die Datenübernahmeeinrichtung hat dann die Funktion, die von einem betreffenden Verbrauchszähler empfangenen Informationen zur Weiterleitung über das Mobilfunksystem an die zentrale Datenerfassungsstelle umzusetzen.

Wegen möglicher Funklöcher des WAN-Mobilfunksystems sollte die Datenübernahmeeinrichtung allerdings auch in der Lage sein, die von einem jeweiligen Verbrauchszähler empfangenen Identifikationsdaten und Zählerstandsdaten automatisch zwischenzuspeichern, um sie nach Passieren eines etwaigen Funkloches dann mit entsprechender Verzögerung über das Mobilfunksystem weiter zu leiten, so dass auch in einem solchen Fall bei Bedarf eine rasche Rückmeldung von der Datenerfassungsstation zu der die Datenübernahmeeinrichtung mitführenden Datenerfassungsperson in Bezug auf einen zuvor ausgelesenen Verbrauchszähler möglich ist.

Die Funkauslesung bietet insbesondere die bereits im einleitenden Teil der Beschreibung angesprochenen Vorteile, dass das Datenerfassungspersonal normalerweise nicht mehr Wohnungen betreten muss, um die Zählerstandsdaten zu erfassen. Es reicht aus, dass die Datenübernahmeeinrichtung in den Bereich der Sendereichweite eines betreffenden funkenden Verbrauchszählers gebracht wird. Die Sendereichweite der Funksender der Verbrauchszähler kann jeweils gering sein und beispielsweise auf einige Meter oder einige 10 Meter begrenzt sein. Die Stromversorgung der mit entsprechend geringer Sendeleistung sendenden Funksender kann aus einer Batterie mit mehrjähriger Batterielebensdauer erfolgen.

Erfindungsgemäß werden die Zähleridentifikationsdaten und die Zählerstandsdaten (Medienverbrauchsdaten) eines jeweiligen Zählers mit Funksendeeinrichtung zumindest in bestimmten Zeitfenstern in Zeitabständen kleiner als 15 Minuten, insbesondere in Zeitabständen kleiner als 2 Minuten und vorzugsweise in Zeitabständen kleiner als 1 Minute wiederholt von der Funksendeeinrichtung zu vorzugsweise stochastischen oder pseudo-stochastischen Zeitpunkten gesendet. Die Sendehäufigkeit sollte so gewählt sein, dass eine hinreichend hohe Wahrscheinlichkeit dafür gegeben ist, dass von jedem Verbrauchszähler ein, möglichst sogar mehrere Funktelegramme kollisionsfrei empfangen werden, ohne dass die Datenerfassungsperson bei ihrer Datenerfassungstour nennenswerte Verweilzeiten bei den einzelnen Verbrauchszählern abwarten muss, bis die jeweilige Funkauslesung fehlerfrei stattgefunden hat. Die Zeitfenster, in denen die wiederholte Sendung der Zähleridentifikationsdaten und Zählerstandsdaten von den betreffenden Verbrauchszählern gesendet werden, können auf bestimmte Ablesetage und an diesen Ablesetagen ggf. auf bestimmte Stunden beschränkt sein, um die Batterien der Funksender der Verbrauchszähler möglichst wenig zu belasten.

Die von der Datenerfassungsperson mitzuführende Apparatur, nämlich die mobile Datenübernahmeeinrichtung mit Funkempfänger zum Empfang von Verbrauchszählerdaten und mit Mobilfunkendgerät für die Kommunikation mit der zentralen Datenerfassungsstelle, kann handlich und leicht ausgebildet sein und mit einer Batterie bzw. einem Akkumulator betrieben werden, der einen Betrieb über mehrere Stunden ermöglicht. Insbesondere ist es nicht erforderlich, die Datenübernahmeeinrichtung mit ausgeprägter Datenbankfunktionalität bzw. mit einem leistungsfähigen, teuren Datenverarbeitungssystem auszustatten. Alle rechenintensiven Datenverarbeitungsvorgänge können in der zentralen Datenerfassungsstelle vorgenommen werden, welche probemlos mit einem entsprechend leistungsfähigen Datenverarbeitungssystem oder einem Netzwerk von Rechnern ausgestattet sein kann, welches die hier in Frage kommenden Aufgaben auch in Bezug auf die Daten von mehreren mobilen Datenübernahmeeinrichtungen quasi gleichzeitig zentral erledigen kann. Da die aufwendigeren Datenverarbeitungsvorgänge zentralisiert sind, ist die erforderliche Hardware- und Software-Wartung im Vergleich zu einem dezentralen Datenbanksystem einfach.

Gemäß der vorliegenden Erfindung kann bei dem Verfahren mit Funkauslesung der Verbrauchszähler die Datenerfassungstour für eine betreffende Datenerfassungsperson sehr einfach gestaltet werden. Die Datenerfassungsperson hat dabei lediglich die Aufgabe, die Datenübernahmeeinrichtung und das mitgeführte Mobilfunk-Endgerät nacheinander in die Bereiche der Sendereichweite der funkenden Verbrauchszähler, die zur Auslesung anstehen, zu bringen, wobei die Ortsinformationen über die Lage der Verbrauchszähler über das Mobilfunksystem von der Datenerfassungsstelle zu dem Mobilfunk-Endgerät der Datenerfassungsperson jeweils gesendet werden. Ein Rechner der zentralen Datenerfassungsstelle kann die Reihenfolge der zur Auslesung anstehenden Verbrauchszähler so festlegen, dass die von der Datenerfassungsperson zurück zu legenden Wege möglichst keine Umwege umfassen. Falls ein Zähler unbeabsichtigt ausgelassen wird oder wegen eines Defektes, einer Störung und dergleichen kein Signal sendet, wird dies in der zentralen Datenerfassungsstelle automatisch registriert, weil von einem solchen Zähler kein erwarteter Datensatz mit Identifikationsdaten zu der zentralen Datenerfassungsstelle gelangt. Von der zentralen Datenerfassungsstelle wird dann automatisch eine entsprechende Rückmeldung über den nicht erfassten Verbrauchszähler über das Mobilfunksystem zu der Datenerfassungsperson veranlasst, so dass diese erneut in den Bereich der Soll-Funkreichweite des ausgelassenen Verbrauchszähers geführt werden kann, um durch etwaige Suche nach optimaleren Empfangsstandorten eventuell doch noch ein Datentelegramm von dem betreffenden Verbrauchszähler zu empfangen. Funktioniert auch dies nicht, kann die Datenerfassungsperson vor Ort versuchen, Zugang zu dem Verbrauchszähler zu erhalten, um das Problem zu erkennen und möglicherweise auch gleich zu beheben.

Die Erfindung betrifft ferner ein Verbrauchsdatenerfassungssystem zur Erfassung von Zählerstandsdaten von Verbrauchszählern nach dem erfindungsgemäßen Verfahren, welche jeweils eine Funksendeeinrichtung umfassen, die dazu eingerichtet ist, Zählerstandsdaten sowie Identifikationsdaten des betreffenden Verbrauchszählers zu senden. Das Verbrauchsdatenerfassungssystem ist erfindungsgemäßdadurch gekennzeichnet, dass es eine zur Verbrauchsdatenerfassung eines jeweiligen Verbrauchszählers in den Bereich der Sendereichweite der Funkesendeeinrichtung des Verbrauchszählers zu bringende mobile Datenübernahmeeinrichtung mit einer Funkempfangseinrichtung zum Empfang der von dem betreffenden Verbrauchszähler gesendeten Daten und ein mit der Funkempfangseinrichtung in Kommunikationsverbindung stehendes, insbesondere mit der Datenübernahmeeinrichtung zu einer Geräteeinheit kombiniertes Mobilfunksende- und -empfangsgerät eines Mobilfunksystems zur Übertragung der Zählerstandsdaten in Zuordnung zu den Zähleridentifikationsdaten zu einer zentralen Datenerfassungsstelle umfasst, wobei das Mobilfunksende- und -empfangsgerät dazu eingerichtet ist, die von einem betreffenden Verbrauchszähler mittels der Funkempfangseinrichtung übernommenen Zählerstandsdaten in Zuordnung zu den Identifikationsdaten des Verbrauchszählers innerhalb eines bestimmten Zeitintervalls, das mit dem Zeitpunkt der Übernahme der Zählerstandsdaten in die Datenübernahmeeinrichtung beginnt, zu senden, so dass die gesendeten Daten über das Mobilfunksystem zu der zentralen Datenerfassungsstelle übertragen werden.

Vorzugsweise sollte die Weiterleitung der Daten über das Mobilfunksystem möglichst unmittelbar nach der Übernahme der Zählerstandsdaten in die Datenübernahmeeinrichtung erfolgen, damit in der zentralen Datenerfassungsstelle anhand eines Datenbankvergleichs schnell festgestellt werden kann, ob ggf. ein jeweiliger Verbrauchszähler, der zur Datenerfassung vorgesehen war, bei einer jeweiligen aktuellen Datenerfassungstour ausgelassen worden ist.

Vorzugsweise umfasst die Gerätekombination aus Datenübernahmeeinrichtung und Mobilfunksende- und -empfangsgerät zusätzlich Komponenten eines Orts-Lokalisierungssystems, insbesondere GPS-Funkortungssystems, zur Ermittlung von Ortsinformationsdaten, die die jeweilige geografische Position der Gerätekombination definieren, wobei das Mobilfunksende- und -empfangsgerät dazu eingerichtet ist, zusätzlich zu den Zählerstandsdaten und den Zähleridentifikationsdaten auch die jeweiligen Ortsinformationsdaten zu senden.

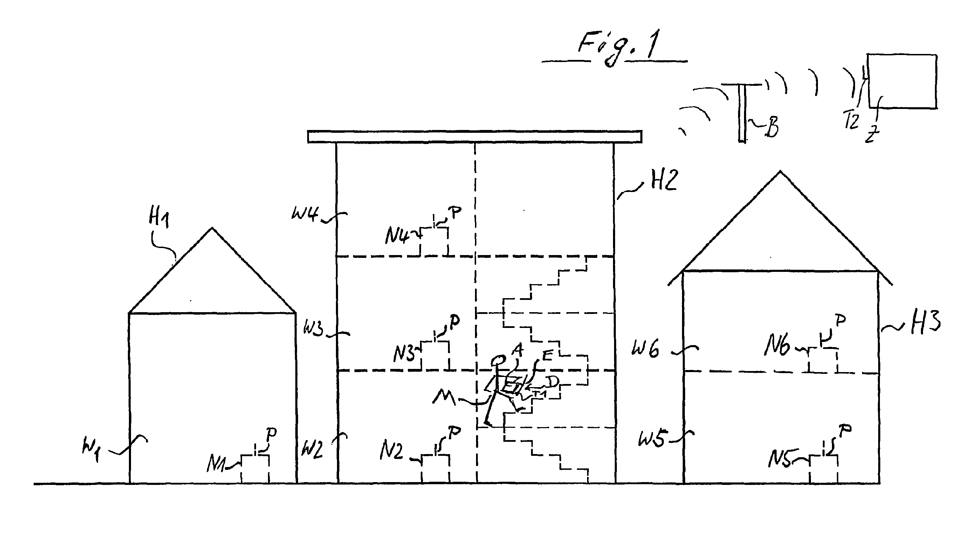

Die Erfindung wird im Folgenden unter Bezugnahme auf die Figur 1 näher erläutert.

Figur 1 ist eine rein schematische Erläuterungsskizze zum Zwecke der Erläuterung einer bevorzugten Vorgehensweise bei dem Verfahren nach der Erfindung.

In Figur 1 sind Häuser H1, H2, H3 und Wohnungen W1 ... W6 angedeutet, wobei in jeder der Wohnungen W1 ... W6 wenigstens eine Medienverbrauchsstelle mit einem Verbrauchszähler vorhanden ist. Bei dem Verbrauchsmedium kann es sich beispielsweise um Gas, Wasser, Strom, Wärme oder dgl. handeln, so dass der Verbrauchszähler entsprechend ein Gaszähler, Wasserzähler, Stromzähler, Wärmezähler oder Heizkostenverteiler sein kann. Im Beispielsfall sind die Verbrauchszähler mit den Zählernummern N1 ... N6 gekennzeichnet.

Es sei vorausgesetzt, dass die Verbrauchszähler N1 ... N6 zur Auslesung anstehen, da zu einem baldigen Zeitpunkt die Medienverbrauchsabrechnungen zu erstellen sind.

Die Verbrauchszähler N1 ... N6 weisen jeweils einen Funksender P auf. Die Funksender P dienen dazu, unidirektional Funktelegramme zu senden, in denen in Bezug auf den zugeordneten Verbrauchszähler Informationen über die Zählernummer, den aktuellen Zählerstand, ggf. die geografische Position des Zählers und ggf. die Sendezeit des Funktelegramms etc. enthalten sind.

Der unmittelbar von den Sendern der Verbrauchszähler ausgehende Funk wird im Folgenden als "Primärfunk" bezeichnet. Die Sendeleistung und die Sendereichweite der Primärfunksender P ist vergleichsweise gering. Es kann eine Sendereichweite von wenigen Metern ausreichen, um eine zuverlässige Erfassung der jeweiligen Funktelegramme nach dem Verfahren der vorliegenden Erfindung zu gewährleisten.

Die Sendehäufigkeit jedes Primärfunksenders P liegt bei mehreren Funktelegrammen pro Minute, wobei die Dauer jedes Funktelegramms kurz ist und z.B. nur einige Millisekunden beträgt. Zur Vermeidung systematischer Kollisionen von Funktelegrammen verschiedener Primärfunksender in Bezug auf einen nachstehend noch zu erläuternden Primärfunkempfänger erfolgt das Senden der Funktelegramme der Primärfunksender P zu stochastischen bzw. quasi stochastischen Zeitpunkten. Die Primärfunksender P können überdies dazu eingerichtet sein, dass sie nur in bestimmten Zeiträumen, etwa an bestimmten Tagen senden, an denen sie zur Funkauslesung in der nachstehend noch näher zu erläuternden Weise anstehen oder in Frage kommen.

Zur Erfassung der mittels Primärfunk gesendeten Verbrauchszählerdaten wird eine Datenerfassungsperson M damit beauftragt, eine erfindungsgemäße Datenübernahmeeinrichtung D normalerweise nacheinander in die Bereiche der Sendereichweiten der Primärfunksender P der Verbrauchszähler N1 ... N6 zu bringen, so dass ein Primärfunkempfänger E, der in die Datenübernahmeeinrichtung D integriert ist, die Funktelegramme der Primärfunksender P nacheinander empfangen kann. Die Datenübernahmeeinrichtung D enthält ferner ein Endgerät eines öffentlichen WAN-Mobilfunksystems. Dieses Endgerät T1 kann ein Funktelefon und/oder ein Funkmodem, insbesondere nach einem oder mehreren der folgenden Standards sein: GSM, SMS, GPRS, UMTS, TETRA.

Die Datenüberahmeeinrichtung D ist dazu eingerichtet, die von den Primärfunksendern P empfangenen Funktelegramme umzusetzen und von dem Endgerät T1 des Mobilfunksystems aus zu senden, so dass die gesendeten Daten über das Mobilfunksystem zu einer zentralen Datenerfassungsstelle Z übertragen werden. Die Mobilfunkübertragung wird nachstehend auch als Sekundärfunk bezeichnet. Mit B ist in Fig. 1 eine (von normalerweise mehreren) Basisstationen des Mobilfunksystems bezeichnet. Die zentrale Datenerfassungsstelle Z ist mit einer Datenverarbeitungsanlage ausgestattet, welche auf Datenbanken zugreifen kann, in denen Daten der Verbrauchszähler N1 ... N6 usw., wie etwa die Zählernumern, die geografischen Koordinaten oder sonstige Lokalisierungsangaben in Bezug auf die Einbauorte der Verbrauchszähler, Zeitdaten für anstehende Auslesezeitpunkte, Zählerstandsdaten aus der Vergangenheit etc. gespeichert sind.

Die Datenverarbeitungsanlage der zentralen Datenerfassungsstelle Z ist im Beispielsfall dazu eingerichtet, über das Mobilfunksystem Wegeleitdaten zu dem Endgerät T1 zu senden, die von einem Anzeigegerät A der mobilen Datenübernahmeeinrichtung D angezeigt werden und somit von der Datenerfassungsperson M zur Kenntnis genommen werden können. Gegebenenfalls kann die Datenübernahmeeinrichtung D auch Mittel zur akustischen Wiedergabe von Wegeleitinformationen enthalten. Die Wegeleitinformationen enthalten Orts- bzw. Adressangaben der jeweiligen Wohnungen W1 ... W6 und werden in der Reihenfolge von der zentralen Datenerfassungsstelle Z per Sekundärfunk zu dem Endgerät T1 übertragen, in der die Datenerfassungsperson M die mobile Datenübernahmeeinrichtung D in die Nähe der betreffenden Wohnungen W1 ... W6 und somit jeweils in den Bereich der Sendereichweite der den jeweiligen Wohnungen zugeordneten Primärfunksender T bringen soll.

In der Momentaufnahme gemäß Fig. 1 hat die Person M die Wohnungen W1 und W2 bei der Datenerfassungstour bereits hinter sich gelassen, so dass die Zählernummern und Zählerstandsdaten der Zähler N1 und N2 per Primärfunk von der Datenübernahmeeinrichtung D erfasst und per Sekundärfunk über das Mobilfunksystem zu der zentralen Datenerfassungsstelle Z übertragen worden sind. Die Person M bewegt sich in den Bereich der Sendereichweite des Primärfunksenders P des Verbrauchszählers N3 im ersten Stockwerk des Hauses H2, um schließlich in das zweite Stockwerk zu gelangen, um dort Funktelegramme des Primärfunksenders P des Verbrauchszählers N4 zu erfassen. Die Person M hat bei ihrer Datenerfassungstour normalerweise keine der Wohnungen W zu betreten. In dem Mehrfamilienhaus H2 sollte es ausreichen, dass die Person M lediglich das Treppenhaus benutzt, um in ausreichende Nähe zu den Primärfunkempfängern P zu gelangen. Bei den kleineren Häusern H1 und H3 sollte es ausreichen, dass die Person M sich lediglich in die Nähe des jeweiligen Hauses begibt, ohne das Haus selbst zu betreten.

Während der Datenerfassungstour dekodiert und überprüft die Datenverarbeitungsanlage der zentralen Datenerfassungsstelle Z laufend die per Sekundärfunk eingehenden Informationen auf Vollständigkeit und Plausibilität durch Vergleich mit den zentralen Datenbankinformationen. Wird festgestellt, dass ein zur Verbrauchsauslesung anstehender Verbrauchszähler bei der Datenerfassungstour ausgelassen wurde, so erfolgt vollautomatisch über Sekundärfunk eine Rückmeldung vom Endgerät T2 an das Endgerät T1 der mobilen Datenübernahmeeinrichtung D, wobei in dieser Rückmeldung Instruktionen für die Datenerfassungsperson M enthalten sein können. Diese Instruktionen enthalten üblicherweise Angaben über den Ort des Zählers N, von dem bei der Datenerfassungsstelle Daten erwartet, jedoch nicht empfangen wurden. Die Datenerfassungsperson M kann dann versuchen, eine günstigere Empfangsposition in Bezug auf den Sender P des betreffenden Verbrauchszählers N zu finden, um ggf. doch noch Funktelegramme von diesem Zähler N zu empfangen. Sollte dies nicht gelingen, so kann die Person M vor Ort versuchen, den Inhaber der betreffenden Wohnung W zu erreichen, um vor Ort zu klären, ob der betreffende Verbrauchszähler N defekt ist oder ggf. hinsichtlich der Primärfunkübertragung ungünstig abgeschirmt ist etc.

Die Datenübernahmeeinrichtung D kann Funkortungsmittel, insbesondere eine GPS-Endkomponente umfassen, so dass stets eine objektive Ortslokalisierung der Datenübernahmeeinrichtung D möglich ist. Die jeweilige geografische Position der Datenübernahmeeinrichtung D kann dann per Sekundärfunk über das Mobilfunksystem der zentralen Datenerfassungsstelle Z mitgeteilt werden. Da bei dem hier erörterten Beispiel in der Datenbank der zentralen Datenerfassungsstelle Z auch die geografischen Positionsdaten der einzelnen Verbrauchszähler N1 ... N6 usw. erfasst sind, kann die Datenverarbeitungsanlage der Datenerfassungsstelle Z ganz konkrete Wegeleitinformationen per Sekundärfunk zu der Datenerfassungsperson M senden, damit diese die Datenerfassungstour möglichst ohne Umwege, Mehrfachanfahrten und Zählerauslassungen durchführen kann.

Es sei darauf hingewiesen, dass der apparative Aufwand bei den mobilen Komponenten, nämlich bei der Datenübernahmeeinrichtung D, vergleichsweise gering sein kann. Die Datenübernahmeeinrichtung D kann handlich, leicht und aus wenigen, insbesondere zu einer Geräteeinheit zusammengefassten Standardkomponenten gebildet sein.

Die Datenerfassung und Weiterleitung erfolgt auf sehr zuverlässige Weise mit sehr geringer Fehlerwahrscheinlichkeit. Es ist nicht erforderlich, das Datenerfassungspersonal M einer umfangreichen Schulung zu unterziehen. Da die Datenerfassungstour vollautomatisch von der zentralen Datenerfassungsstelle Z geplant wird und sämtliche zur Durchführung der Datenerfassungstour erforderlichen Informationen online per Sekundärfunk über das Mobilfunksystem zur Datenübernahmeeinrichtung D übertragen werden können, reicht es normalerweise aus, wenn die mit der Datenerfassungstour beauftragte Person M den an der Anzeige A der Datenübernahmeeinrichtung D angezeigten Wegeleitinformationen folgt, um die Datenübernahmeeinrichtung D jeweils in den Bereich der Sendereichweite der jeweiligen Primärfunksender P in der vorgegebenen bzw. von der Datenerfassungsstelle Z empfohlenen Reihenfolge zu bringen.

Die Person M muss ihre Aufenthaltsdauer in der Nähe der betreffenden Verbrauchszähler aus Sicherheitsgründen nicht mehr sehr lange wählen, um möglichst keinen Verbrauchszähler zu verpassen, sondern sie wird quasi selbst lernen, wie schnell sie Objekte begehen kann, damit Rückmeldungen von der Zentrale Z hinsichtlich ausgelassener Verbrauchszähler unterbleiben.

Die Datenübernahmeeinrichtung D kann im übrigen noch dazu genutzt werden, die Daten neu montierter Verbrauchszähler zum Zwecke der Ergänzung der Datenbank in der zentralen Datenerfassungsstelle zu übermitteln.

## Patentansprüche

1. Verfahren zur Erfassung von Zählerstandsdaten von mehreren, an verschiedenen Orten vorgesehenen Verbrauchszählern (N1 ... N6), wobei man während einer Datenerfassungstour die Zählerstandsdaten von den Verbrauchszählern in eine mobile Datenübernahmeeinrichtung (D) in Zuordnung zu Identifikationsdaten des jeweiligen Verbrauchszählers übernimmt, wobei man jeweils innerhalb eines bestimmten Zeitintervalls, das mit dem Zeitpunkt der Übernahme von Zählerstandsdaten von einem jeweiligen Verbrauchszähler (N1 .. N6) in die Datenübernahmeeinrichtung (D) beginnt, Identifikationsdaten des betreffenden Verbrauchszählers (N1 ... N6) über ein Mobilfunksystem zu einer zentralen Datenerfassungsstelle (Z) sendet, und wobei zumindest einige Verbrauchszähler mit einer Funksendeeinrichtung (P) vorzugsweise geringer Sendereichweite ausgestattet sind, wobei die jeweilige Funksendeeinrichtung (P) dazu eingerichtet ist, die Identifikationsdaten und die Zählerstandsdaten des zugehörigen Verbrauchszählers (N1 ... N6) zu senden, und wobei die mobile Datenübernahmeeinrichtung (D) eine Funkempfangseinrichtung (E) zum Empfang solcher Daten umfasst, wobei man bei der Datenerfassungstour die mobile Datenübernahmeeinrichtung (D) in den Bereich der Sendereichweite der Funksendeeinrichtung (P) eines jeweiligen Verbrauchszählers (N1 ... N6) bringt, um dessen Identifikationsdaten und Zählerstandsdaten im Wege der Funkübertragung zu übernehmen, **dadurch gekennzeichnet, dass** die Zähleridentifikationsdaten und Zählerstandsdaten eines jeweiligen Verbrauchszählers (N1 ... N6) mit Funksendeeinrichtung (P) zumindest in bestimmten Zeitfenstern in Zeitabständen kleiner als 15 Minuten, insbesondere in Zeitabständen kleiner als 2 Minuten wiederholt von der Funksendeeinrichtung (P), insbesondere zu stochastischen oder pseudo-stochastischen Zeitpunkten gesendet werden.

2. Verfahren zur Erfassung von Zählerstandsdaten nach Anspruch 1, **dadurch gekennzeichnet, dass** das bestimmte Zeitintervall eine Dauer von weniger als 15 Minuten und insbesondere eine Dauer von weniger als 2 Minuten hat.

3. Verfahren zur Erfassung von Zählerstandsdaten nach einem der vorhergehenden Ansprüche, **dadurch gekennzeichnet, dass** in einer der zentralen Datenerfassungsstelle (Z) zugeordneten Auswertungsstelle die über das Mobilfunksystem (T1, B, T2) übertragenen Verbrauchszähleridentifikationsdaten mit zentral gespeicherten Verbrauchszähleridentifikationsdaten verglichen werden, um festzustellen, ob bei der aktuellen Datenerfassungstour Verbrauchszähler (N) unbeabsichtigt ausgelassen worden sind, und
dass bei Feststellung eines bei der Datenerfassungstour ausgelassenen Verbrauchszählers (N) eine von der Auswertungsstelle veranlasste Funkmeldung über ein Mobilfunksystem (T1, B, T2) zu einem mit der Datenübernahmeeinrichtung (D) bei der Datenerfassungstour mitzuführenden Mobilfunkempfänger (T1) gesendet wird, um auf den ausgelassenen Verbrauchszähler (N) hinzuweisen.

4. Verfahren zur Erfassung von Zählerstandsdaten nach Anspruch 3, **dadurch gekennzeichnet, dass** die Funkmeldung Informationen über die geografische Position des unbeabsichtigt ausgelassenen Verbrauchszählers (N) enthält.

5. Verfahren zur Erfassung von Zählerstandsdaten nach einem der vorhergehenden Ansprüche, **dadurch gekennzeichnet, dass** man zusätzlich zu den Identifikationsdaten des jeweiligen Verbrauchszählers (N) Daten über die jeweilige geografische Position der mobilen Datenübernahmeeinrichtung (D) über ein Mobilfunksystem zu der zentralen Datenerfassungsstelle (Z) sendet.

6. Verfahren zur Erfassung von Zählerstandsdaten nach einem der vorhergehenden Ansprüche, **dadurch gekennzeichnet, dass** man in Zuordnung zu den Identifikationsdaten eines betreffenden Verbrauchszählers (N1 ... N6) auch die von dem Verbrauchszähler übernommenen Zählerstandsdaten über das Mobilfunksystem (T1, B, T2) zu der zentralen Datenerfassungsstelle (Z) sendet.

7. Verfahren nach einem der vorhergehenden Ansprüche, **dadurch gekennzeichnet, dass** man Informationen über die zur Zählerstandsdatenerfassung bei der Datenerfassungstour jeweils anstehenden Verbrauchszähler (N1 ... N6) über ein Mobilfunksystem (T1, B, T2) an einen mit der Datenübernahmeeinrichtung mitzuführenden Mobilfunkempfänger (T1) des Mobilfunksystems sendet.

8. Verfahren zur Erfassung von Zählerstandsdaten nach einem der vorhergehenden Ansprüche, **dadurch gekennzeichnet, dass** zumindest einige Verbrauchszähler (N1 ... N6) sowie die mobile Datenübernahmeeinrichtung (D) mit einer optischen Datenkommunikationsschnittstelle ausgestattet sind und dass die Daten zur Verbrauchszähleridentifikation und die Zählerstandsdaten der betreffenden Verbrauchszähler jeweils im Wege der optischen Signalübertragung vom Verbrauchszähler zu der mobilen Datenübernahmeeinrichtung über die optischen Datenkommunikationsschnittstellen übertragen werden.

9. Verfahren nach einem der vorhergehenden Ansprüche, **dadurch gekennzeichnet, dass** die mittels der Funksendeeinrichtung (P) gesendeten Zählerstandsdaten Informationen über den jeweiligen aktuellen Zählerstand und über den Zählerstand zu bestimmten zurückliegenden Zeitpunkten enthalten.

10. Verbrauchsdatenerfassungssystem zur Erfassung von Zählerstandsdaten von Verbrauchszählern, welche jeweils eine Funksendeeinrichtung (P) umfassen, die dazu eingerichtet ist, Zählerstandsdaten sowie Identifikationsdaten des betreffenden Verbrauchszählers (N1 ... N6) zu senden, wobei das Verbrauchsdatenerfassungssystem wenigstens eine zur Verbrauchsdatenerfassung eines jeweiligen Verbrauchszählers (N1 ... N6) in den Bereich der Sendereichweite der Funksendeeinrichtung (P) des Verbrauchszählers (N1 ... N6) zu bringende mobile Datenübernahmeeinrichtung (D) mit einer Funkempfangseinrichtung (E) zum Empfang der von dem betreffenden Verbrauchszähler (N1 ... N6) gesendeten Daten und ein mit der Funkempfangseinrichtung (E) in Kommunikationsverbindung stehendes, insbesondere mit der Datenübernahmeeinrichtung (D) zu einer Geräteeinheit kombiniertes Mobilfunksende- und -empfangsgerät (T1) eines Mobilfunksystems (T1, B, T2) zur Übertragung der Zählerstandsdaten in Zuordnung zu den Zähleridentifikationsdaten zu einer zentralen Datenerfassungsstelle (Z) umfasst, wobei das Mobilfunksende- und -empfangsgerät (T1) dazu eingerichtet ist, die von einem betreffenden Verbrauchszähler mittels der Funkempfangseinrichtung (E) übernommenen Zählerstandsdaten in Zuordnung zu den Identifikationsdaten des Verbrauchszählers innerhalb eines bestimmten Zeitintervalls, das mit dem Zeitpunkt der Übernahme der Zählerstandsdaten in die Datenübernahmeeinrichtung (D) beginnt, zu senden, so dass die gesendeten Daten über das Mobilfunksystem zu der zentralen Datenerfassungsstelle (Z) übertragen werden, **dadurch gekennzeichnet, dass** die Verbrauchszähler (N1 ... N6) derart eingerichtet sind, dass die Zähleridentifikationsdaten und die Zählerstandsdaten zumindest in bestimmten Zeitfenstern in Zeitabständen kleiner als 1 5 Minuten, insbesondere in Zeitabständen kleiner als 2 Minuten wiederholt von der Funksendeeinrichtung (P), insbesondere zu stochastischen oder pseudo-stochastischen Zeitpunkten gesendet werden.

11. Verbrauchsdatenerfassungssystem nach Anspruch 10, **dadurch gekennzeichnet, dass** das bestimmte Zeitintervall eine Dauer von weniger als 15 Minuten und insbesondere eine Dauer von weniger als 2 Minuten hat.

12. Verbrauchsdatenerfassungssystem nach Anspruch 10 oder 11, **dadurch gekennzeichnet, dass** die Gerätekombination aus Datenübernahmeeinrichtung (D) und Mobilfunksende- und -empfangsgerät (T1) zusätzlich Komponenten eines Orts-Lokalisierungssystems, insbesondere Funkortungssystems, zur Ermittlung von Ortsinformationsdaten, die die jeweilige geografische Position dieser Gerätekombination definieren, umfasst, wobei das Mobilfunksende- und -empfangsgerät (T1) dazu eingerichtet ist, zusätzlich zu den Zählerstandsdaten und den Zähleridentifikationsdaten auch die jeweiligen Ortsinformationsdaten zu senden.

13. Mobile Datenübernahmeeinrichtung für ein Verbrauchsdatenerfassungssystem nach einem der Ansprüche 10 bis 12, **gekennzeichnet durch** die Kombination aus einem Funkempfänger (E) zum Empfang von Funktelegrammen von den Verbrauchszählern (N) und einem Mobilfunkendgerät (T1) des Mobilfunksystems.

## Claims

1. A method of acquiring meter reading data of a plurality of consumer meters (N1.....N6) provided at different locations, wherein during a data acquisition tour the meter reading data of the consumer meters are transferred into a mobile data-transfer device (D) in association with identification data of the respective consumer meter, wherein in each case within a given time interval, which starts at the moment of the transfer of meter reading data from a respective consumer meter (N1....N6) into the data-transfer device (D), identification data of the relevant consumer meter (N1....N6) are transmitted via a mobile radio system to a central data-acquisition point (Z), and wherein at least some consumer meters are provided with a radio-transmitting device (P) with preferably low radio transmitting range, wherein the respective radio-transmitting device (P) is set up to transmit the identification data and the meter reading data of the associated consumer meter (N1....N6), and wherein the mobile data-transfer device (D) comprises a radio-receiving device (E) for receiving such data, wherein-during the data acquisition tour the mobile data-transfer device (D) is brought within the transmitting range of the radio-transmitting device (P) of a respective consumer meter (N1....N6) so as to transfer its identification data and meter reading data in the course of the radio transmission, **characterised in that** the meter identification data and meter reading data of a respective consumer meter (N1....N6) are transmitted with the radio-transmitting device (P) at least in given time windows in time intervals of fewer than 15 minutes, in particular in time intervals of fewer than 2 minutes repeated by the radio-transmitting device (P), in particular at stochastic or pseudo-stochastic times.

2. A method of acquiring meter reading data according to Claim 1, **characterised in that** the given time interval has a duration of less than 15 minutes and in particular a duration of less than 2 minutes.

3. A method of acquiring meter reading data according to one of the preceding Claims, **characterised in that** in an evaluation point associated with the central data-acquisition point (Z) the consumer meter identification data transmitted via the mobile radio system (T1,B,T2) are compared to centrally stored consumer meter identification data so as to establish whether during the current data-acquisition tour consumer meters (N) have been unintentionally omitted, and
**in that** in the event of establishing that a consumer meter (N) has been omitted during the data-acquisition tour a radio message produced by the evaluation point is transmitted via a mobile radio system (T1,B,T2) to a mobile radio receiver (T1) entrained along with the data-transfer device (D) during the data acquisition tour so as to indicate the omitted consumer meter (N).

4. A method of acquiring meter reading data according to Claim 3, **characterised in that** the radio message contains information regarding the geographical position of the unintentionally omitted consumer meter (N).

5. A method of acquiring meter reading data according to any one of the preceding Claims, **characterised in that**, in addition to the identification data of the respective consumer meter (N), data regarding the respective geographical position of the mobile data-transfer device (D) are sent via a mobile radio system to the central data-acquisition point (Z).

6. A method of acquiring meter reading data according to any one of the preceding Claims, **characterised in that**, in association with the identification data of a respective consumer meter (N1....N6), the meter reading data transferred from the consumer meter are also transmitted via the mobile radio system (T1,B,T2) to the central data-acquisition point (Z).

7. A method according to any one of the preceding Claims, **characterised in that** information regarding the consumer meters (N1....N6) respectively available for meter reading data acquisition during the data acquisition tour is transmitted via a mobile radio system (T1,B,T2) to a mobile radio receiver (T1) to be entrained along with the data-transfer device.

8. A method of acquiring meter reading data according to any one of the preceding Claims, **characterised in that** at least some consumer meters (N1....N6) and also the mobile data-transfer device (D) are provided with an optical data-communication interface, and **in that** the data for consumer meter identification and the meter reading data of the relevant consumer meters are transmitted in each case in the course of the optical signal transmission from the consumer meter to the mobile data-transfer device via the optical data-communication interfaces.

9. A method of acquiring meter reading data according to any one of the preceding Claims, **characterised in that** the meter reading data transmitted by means of the radio transmitting device (P) include information regarding the respective current meter reading and regarding the meter reading at given times in the past.

10. A consumption data acquisition system for acquiring meter reading data of consumer meters which each comprise a radio transmitting device (P) which is set up to transmit meter reading data and also identification data of the relevant consumer meter (N1...N6), wherein the consumption data acquisition system comprises at least one mobile data-transfer device (D) for consumption data acquisition of a respective consumer meter (N1....N6) to be brought within the transmitting range of the radio transmitting device (P) of the consumer meter (N1...N6), with a radio-receiving device (E) for receiving the data transmitted from the relevant consumer meter (N1... N6), and a mobile radio transmitting and receiving device (T1) of a mobile radio system (T1,B,T2), which is in communications link with the radio-receiving device (E), in particular combined with the mobile data-transfer device (D) to form an equipment unit, for transmitting the meter reading data in association with the meter identification data to a data-acquisition point (Z), wherein the mobile radio transmitting and receiving device (T1) is set up to transmit the meter reading data transferred from a relevant consumer meter by means of the radio-receiving device (E) in association with the identification data of the consumer meter within a given time interval, which starts at the moment of the transfer of meter reading data into the data-transfer device (D), so that the transmitted data are transmitted via the mobile radio system to the central data- acquisition point (Z), **characterised in that** the consumer meters (N1....N6) are set up so that the meter identification data and the meter reading data are transmitted at least in given time windows in time intervals of fewer than 15 minutes, in particular in time intervals of fewer than 2 minutes repeated by the radio-transmitting device (P), in particular at stochastic or pseudo-stochastic times.

11. A consumption data acquisition system according to Claim 10, **characterised in that** the given time interval has a duration of less than 15 minutes and in particular a duration of less than 2 minutes.

12. A consumption data acquisition system according to Claim 10 or 11, **characterised in that** the equipment combination of data-transfer device (D) and mobile radio transmitting and receiving device (T1) additionally comprises components of a position locating system, in particular a radio locating system, for detecting position information data which define the respective geographical position of this equipment combination, wherein the mobile radio transmitting and receiving device (T1) is set up to transmit, in addition to the meter reading data and meter identification data, also the respective position information data.

13. A mobile data transfer device for a consumption data acquisition system according to any one of Claims 10 to 12, **characterised by** the combination of a radio receiver (E) for receiving radio messages from the consumer meters (N) and a mobile radio terminal device (T1) of the mobile radio system.

## Revendications

1. Procédé de collecte de données affichées au compteur de plusieurs compteurs de consommation (N1, ..., N6) prévus en différents endroits, dans lequel on transfère, pendant une tournée de collecte de données, les données affichées au compteur des compteurs de consommation à un dispositif mobile de capture de données (D) en association avec des données d'identification du compteur de consommation respectif, dans lequel on envoie, respectivement à l'intérieur d'un intervalle de temps déterminé qui commence à l'instant du transfert de données affichées au compteur d'un compteur de consommation respectif (N1, ..., N6) au dispositif de capture de données (D), des données d'identification du compteur de consommation concerné (N1, ..., N6), à un poste central de collecte de données (Z) au moyen d'un système téléphonique mobile, et dans lequel au moins quelques compteurs de consommation sont équipés d'un dispositif d'émission radio (P) de préférence de faible portée d'émission, dans lequel le dispositif d'émission radio respectif (P) est conçu pour envoyer les données d'identification et les données affichées au compteur du compteur de consommation correspondant (N1, ..., N6), et dans lequel le dispositif mobile de capture de données (D) comprend un dispositif de réception radio (E) pour la réception de ces données, dans lequel on apporte, lors de la tournée de collecte de données, le dispositif mobile de capture de données (D) dans la région de la portée d'émission du dispositif d'émission radio (P) d'un compteur de consommation respectif (N1, ..., N6) afin de capturer les données d'identification de celui-ci et les données affichées à ce compteur au cours de la transmission radio, **caractérisé en ce que** l'on envoie les données d'identification de compteur et les données affichées au compteur d'un compteur de consommation respectif (N1, ..., N6) avec un dispositif d'émission radio (P), de façon répétée au moins dans des créneaux de temps déterminés à des intervalles de temps inférieurs à 15 minutes, en particulier à des intervalles de temps inférieurs à 2 minutes, à partir du dispositif d'émission radio (P), en particulier à des instants stochastiques ou pseudo-stochastiques.

2. Procédé de collecte de données affichées au compteur selon la revendication 1, **caractérisé en ce que** l'intervalle de temps déterminé a une durée de moins de 15 minutes et en particulier une durée de moins de 2 minutes.

3. Procédé de collecte de données affichées au compteur selon l'une quelconque des revendications précédentes, **caractérisé en ce que**, dans un poste d'analyse associé au poste central de collecte de données (Z), on compare les données d'identification de compteur de consommation transmises via le système de téléphonie mobile (T1, B, T2) avec des données d'identification de compteur de consommation stockées en mémoire centrale, afin de contrôler si des compteurs de consommation (N) ont été involontairement omis lors de la tournée actuelle de collecte de données, et **en ce que**, si l'on constate qu'un compteur de consommation (N) a été omis lors de cette tournée de collecte de données, on envoie un message radio, produit par le poste d'analyse, au moyen d'un système de téléphonie mobile (T1, B, T2) à un récepteur radio mobile (T1) devant accompagner le dispositif de capture de données (D) lors de la tournée de collecte de données, afin de lui signaler le compteur de consommation omis (N).

4. Procédé de collecte de données affichées au compteur selon la revendication 3, **caractérisé en ce que** le message radio contient des informations sur la position géographique du compteur de consommation involontairement omis (N).

5. Procédé de collecte de données affichées au compteur selon l'une quelconque des revendications précédentes, **caractérisé en ce que**, en plus des données d'identification du compteur de consommation respectif (N), on envoie des données sur la position géographique respective du dispositif mobile de capture de données (D) au moyen d'un système de téléphonie mobile au poste central de collecte de données (Z).

6. Procédé de collecte de données affichées au compteur selon l'une quelconque des revendications précédentes, **caractérisé en ce que** l'on envoie également, en association avec les données d'identification d`un compteur de consommation concerné (N1, ..., N6), les données affichées au compteur relevées sur le compteur de consommation au moyen du système de téléphonie mobile (T1, B, T2) au poste central de collecte de données (Z).

7. Procédé selon l'une quelconque des revendications précédentes, **caractérisé en ce que** l'on envoie des informations sur les compteurs de consommation (N1, ..., N6) respectivement prévus pour la collecte de données affichées au compteur lors de la tournée de collecte de données à un récepteur radio mobile (T1) du système de téléphonie mobile (T1, B, T2) devant accompagner le dispositif de capture de données.

8. Procédé de collecte de données affichées au compteur selon l'une quelconque des revendications précédentes, **caractérisé en ce qu'**au moins quelques compteurs de consommation (N1, ..., N6) ainsi que le dispositif mobile de capture de données (D) sont équipés d'une interface optique de communication de données et **en ce que** l'on transmet les données pour l'identification du compteur de consommation et les données affichées au compteur des compteurs de consommation concernés respectivement au cours de la transmission optique de signaux du compteur de consommation au dispositif mobile de capture de données au moyen des interfaces optiques de communication de données.

9. Procédé selon l'une quelconque des revendications précédentes, **caractérisé en ce que** les données affichées au compteur envoyées au moyen du dispositif d'émission radio (P) contiennent des informations sur l'état actuel respectif du compteur et sur l'état du compteur à des instants antérieurs déterminés.

10. Système de collecte de données de consommation pour la collecte de données affichées au compteur de compteurs de consommation, qui comprennent respectivement un dispositif d'émission radio (P), qui est conçu pour envoyer des données affichées au compteur ainsi que des données d'identification du compteur de consommation concerné (N1, ..., N6), dans lequel le système de collecte de données de consommation comprend au moins un dispositif mobile de capture de données (D) à apporter dans la région de la portée du dispositif d'émission radio (P) du compteur de consommation (N1, ..., N6) pour la collecte de données de consommation d'un compteur de consommation respectif (N1, ..., N6), avec un dispositif de réception radio (E) pour la réception des données envoyées par le compteur de consommation concerné (N1, ..., N6) et un appareil mobile d'émission et de réception radio (T1) d'un système de téléphonie mobile (T1, B, T2) se trouvant en liaison de communication avec le dispositif de réception radio (E) et combiné en une unité d'appareils en particulier avec le dispositif de capture de données (D) pour la transmission des données affichées au compteur en association avec les données d'identification de compteur à un poste central de collecte de données (Z), dans lequel l'appareil mobile d'émission et de réception radio (T1) est conçu pour envoyer les données affichées au compteur relevées d'un compteur de consommation concerné au moyen du dispositif de réception radio (E) en association avec les données d'identification du compteur de consommation à l'intérieur d'un intervalle de temps déterminé, qui commence à l'instant de la capture des données affichées au compteur dans le dispositif de capture de données (D), de telle manière que les données envoyées soient transmises au poste central de collecte de données (Z) au moyen du système de téléphonie mobile, **caractérisé en ce que** les compteurs de consommation (N1, ..., N6) sont conçus de telle manière que les données d'identification de compteur et les données affichées au compteur soient envoyées par le dispositif d'émission radio (P), de façon répétée au moins dans des créneaux de temps déterminés à des intervalles de temps inférieurs à 15 minutes, en particulier à des intervalles de temps inférieurs à 2 minutes, en particulier à des instants stochastiques ou pseudo-stochastiques.

11. Système de collecte de données de consommation selon la revendication 10, **caractérisé en ce que** l'intervalle de temps déterminé a une durée de moins de 15 minutes et en particulier une durée de moins de 2 minutes.

12. Système de collecte de données de consommation selon la revendication 10 ou 11, **caractérisé en ce que** la combinaison d'appareils composée du dispositif de capture de données (D) et de l'appareil mobile d'émission et de réception radio (T1) comprend en outre des composants d'un système de géolocalisation, en particulier d'un système de radiolocalisation, pour la détection de données de géolocalisation, qui définissent la position géographique respective de cette combinaison d'appareils, dans lequel l'appareil mobile d'émission et de réception radio (T1) est conçu pour envoyer également les données de géolocalisation respectives en plus des données affichées au compteur et des données d'identification de compteur.

13. Dispositif mobile de capture de données pour un système de collecte de données de consommation selon l'une quelconque des revendications 10 à 12, **caractérisé par** la combinaison d'un récepteur radio (E) pour la réception de radiotélégrammes émanant des compteurs de consommation (N) et d'un appareil de téléphonie mobile (T1) du système de téléphonie mobile.
